(19) Europäisches Patentamt
European Patent Office
Office européen des brevets

(11) **EP 2 044 423 B1**

(12) **FASCICULE DE BREVET EUROPEEN**

(45) Date de publication et mention
de la délivrance du brevet:
**28.03.2018 Bulletin 2018/13**

(51) Int Cl.:
***G01N 23/20*** *(2018.01)*     ***G01N 23/201*** *(2018.01)*

(21) Numéro de dépôt: **07803851.0**

(22) Date de dépôt: **05.07.2007**

(86) Numéro de dépôt international:
**PCT/FR2007/001146**

(87) Numéro de publication internationale:
**WO 2008/003865 (10.01.2008 Gazette 2008/02)**

(54) **DISPOSITIF ET PROCEDE DE CARACTERISATION DE SURFACES**

VORRICHTUNG UND VERFAHREN ZUR OBERFLÄCHENCHARAKTERISIERUNG

DEVICE AND METHOD OF CHARACTERIZING SURFACES

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **07.07.2006 FR 0606211**

(43) Date de publication de la demande:
**08.04.2009 Bulletin 2009/15**

(73) Titulaires:
  • **Centre National de la Recherche Scientifique**
    **75016 Paris (FR)**
  • **UNIVERSITE PARIS-SUD (PARIS 11)**
    **91405 Orsay (FR)**

(72) Inventeurs:
  • **KHEMLICHE, Hocine**
    **91170 Viry-Chatillon (FR)**
  • **RONCIN, Philippe**
    **91190 Gif-sur-Yvette (FR)**
  • **ROUSSEAU, Patrick**
    **91170 Viry-Chatillon (FR)**

(74) Mandataire: **Priori, Enrico**
**Marks & Clerk France**
**Conseils en Propriété Industrielle**
**Immeuble «Visium»**
**22, avenue Aristide Briand**
**94117 Arcueil Cedex (FR)**

(56) Documents cités:
**EP-A1- 1 401 007**

  • **DATABASE INSPEC [Online] THE INSTITUTION OF ELECTRICAL ENGINEERS, STEVENAGE, GB; 15 septembre 1985 (1985-09-15), PIMBLEY J M ET AL: "Integral representation of the diffracted intensity from one-dimensional stepped surfaces and epitaxial layers" XP002439157 Database accession no. 2571642 & Journal of Applied Physics USA, vol. 58, no. 6, 15 septembre 1985 (1985-09-15), pages 2184-2189, ISSN: 0021-8979**
  • **DATABASE INSPEC [Online] THE INSTITUTION OF ELECTRICAL ENGINEERS, STEVENAGE, GB; 27 décembre 2003 (2003-12-27), KAWASUSO A ET AL: "Top most surface studies by total reflection positron diffraction" XP002439158 Database accession no. 8250148 & e-Journal of Surface Science and Nanotechnology Surface Sci. Soc. Japan Japan, vol. 1, 27 décembre 2003 (2003-12-27), ISSN: 0000-0957**

**Description**

L'invention porte sur un dispositif et un procédé de caractérisation de surfaces. Elle permet en particulier de déterminer la structure cristallographique de surfaces cristallines et de surveiller en temps réel la croissance de cristaux par épitaxie par faisceaux moléculaires.

Les techniques les plus couramment utilisées pour la détermination de la structure cristallographique des surfaces sont la diffraction d'électrons lents (LEED, « Low Energy Electron Diffraction ») et la diffraction par réflexion d'électrons rapides (RHEED, « Reflection High Energy Electron Diffraction). Voir par exemple EP 1 401 007. En particulier, la technique RHEED présente l'avantage très important d'être compatible avec la croissance de cristaux par épitaxie par faisceaux moléculaires ; en fait, les appareils d'épitaxie par faisceaux moléculaires comprennent généralement un dispositif RHEED intégré. Ce dernier est essentiellement constitué d'un canon à électrons, agencé de manière à produire un faisceau sensiblement monocinétique d'électrons ayant une énergie de l'ordre de 5 - 50 keV dirigé vers la surface à étudier avec un angle d'incidence de l'ordre de 1° - 4° par rapport au plan de la surface, un écran phosphore permettant la visualisation des électrons diffractés vers l'avant par la surface et une caméra pour acquérir des images dudit écran phosphore.

La technique RHEED permet une caractérisation complète de la structure cristallographique d'une surface, à condition que soient effectuées des acquisitions correspondantes à aux moins deux orientations distinctes de ladite surface. Cependant, très souvent, on se limite à une caractérisation qualitative de l'état d'une surface par comparaison avec une figure de diffraction de référence. Une autre application importante de la technique RHEED est la surveillance en temps réel de la croissance couche par couche d'un cristal par épitaxie par faisceaux moléculaires. En effet, lorsqu'une couche vient d'être achevée, les pics de diffraction sont bien visibles et présentent un contraste élevé ; au fur et à mesure que des atomes supplémentaires se déposent sur cette couche le contraste se dégrade, pour augmenter à nouveau lorsque ces atomes sont suffisamment nombreux pour former une nouvelle couche. On observe ainsi des oscillations du signal de diffraction, qui permettent de suivre dans le temps la formation des différentes couches atomiques du cristal.

Bien que ses propriétés avantageuses en aient fait un standard industriel, la technique RHEED présente certains inconvénients.

Premièrement, les électrons, même en incidence rasante, ont un pouvoir de pénétration de plusieurs Angstroms, ce qui signifie qu'ils ne sont pas sensibles uniquement à la première couche atomique, constituant la surface au sens strict, mais également aux premières couches sous-jacentes. Par ailleurs, la pénétration des électrons sous la surface résulte souvent en une figure de diffraction complexe et difficile à interpréter.

En outre, les techniques de diffraction d'électrons (RHEED, mais aussi LEED) sont mal adaptées à la caractérisation des matériaux isolants, car elles induisent un chargement de surface qui peut influencer le faisceau primaire lui-même et ainsi brouiller la figure de diffraction. Encore plus grave, généralement les interactions inélastiques entre les électrons et la surface endommagent cette dernière et peuvent perturber radicalement la croissance des films isolants. Pour ces raisons, ces techniques ne permettent pas le contrôle en ligne de la croissance de couches isolantes, mais sont plutôt utilisées comme des techniques d'essai destructif lors de l'élaboration de protocoles de fabrication.

Compte tenu de l'importance des couches isolantes, et notamment des oxydes, en microélectronique, il s'agit là d'une limitation majeure de cette technique.

Pour la caractérisation cristallographique des surfaces, il est également connu d'utiliser des atomes légers, généralement de He, ayant une énergie de l'ordre de quelques dizaines ou centaines de meV et dirigés perpendiculairement ou obliquement à la surface à étudier, généralement avec un angle d'incidence compris entre 40° et 60° par rapport au plan de la surface. Cette technique, connue comme diffusion d'atomes d'hélium (HAS, « Hélium Atom Scattering ») ou diffusion d'atomes thermiques (TEAS, « Thermal Energy Atom Scattering ») présente l'avantage d'être uniquement sensible à la première couche atomique de l'échantillon étudié, le pouvoir de pénétration des atomes de faible énergie étant négligeable, et de ne pas induire de chargement des surfaces isolantes. Cependant, elle n'est que très rarement utilisée dans l'industrie car elle présente des inconvénients majeurs.

Premièrement, elle n'est pas compatible avec la croissance par épitaxie par faisceaux moléculaires, qui nécessite qu'une partie importante de l'espace au-dessus de la surface reste dégagé pour permettre le passage des faisceaux moléculaires. Or, pour mettre en oeuvre la technique HAS/TEAS, il est justement nécessaire de prévoir une source d'atomes thermiques non loin de la normale à la surface ; cette technique ne permet donc généralement que des analyses ex-situ. Elle partage d'ailleurs cet inconvénient avec la technique LEED, ce qui explique pourquoi cette dernière est moins populaire que la RHEED, bien qu'elle lui soit supérieure du point de vue de la qualité des figures de diffraction obtenues.

Deuxièmement, la génération de faisceaux atomiques de faible énergie nécessite des équipements lourds et encombrants (jets supersoniques, étages de pompage différentiels, etc).

Troisièmement, les atomes neutres de faible énergie sont extrêmement difficiles à détecter. La détection se fait généralement point par point à l'aide d'un spectromètre de masse qui est déplacé en deux dimensions. La formation d'une figure de diffraction requiert donc un temps considérable, incompatible avec un contrôle en ligne.

En pratique, cette technique est presque exclusivement utilisée en laboratoire.

Il est également connu d'étudier la structure des surfaces à l'aide d'atomes ou d'ions faiblement chargés d'énergie relativement élevée (plusieurs keV) en incidence rasante. Dans ces conditions, les projectiles se comportent essentiellement comme des particules classiques et sont réfléchis par le potentiel de la surface à grande distance de la première couche atomique. Le profil de diffusion donne indirectement accès à la forme du potentiel d'interaction entre le projectile et la première couche de la surface. Pour plus de détails sur cette méthode de caractérisation de surface, voir l'article de A. Schüller et al. « Dynamic dependence of interaction potentials for keV atoms at metal surfaces », Phys. Rev. A, 69, 050901 (R), 2004.

L'inconvénient de cette technique est que les profils de diffusion sont difficiles à interpréter et, en tout cas, ils sont moins riches en information que les techniques de diffraction exploitant le caractère ondulatoire des projectiles.

Un but de la présente invention est de remédier à au moins certains des inconvénients de l'art antérieur.

De manière plus spécifique, un but de l'invention est de fournir une technique de caractérisation de surface présentant une sensibilité accrue à la première couche atomique par rapport aux techniques RHEED et LEED.

Un autre but de l'invention est de fournir une technique de caractérisation mieux adaptée aux surfaces isolantes que les techniques connues de l'art antérieur.

Encore un autre but de l'invention est de fournir une technique de caractérisation de surfaces compatible avec la croissance par épitaxie par faisceaux moléculaires et permettant un contrôle en temps réel de ladite croissance.

Encore un autre but de l'invention est de fournir une technique de caractérisation de surfaces simple à mettre en oeuvre, non seulement en laboratoire, mais également dans un environnement industriel.

Au moins un des buts précités est atteint grâce à un dispositif pour la caractérisation de surfaces comportant :

- des moyens de génération d'un faisceau d'atomes ou molécules neutres, agencés pour diriger ledit faisceau vers une surface à caractériser ; et
- des moyens de détection sensibles en position pour détecter les atomes ou molécules neutres dudit faisceau, diffusés vers l'avant par ladite surface à caractériser ;

caractérisé en ce que

- lesdits moyens de génération d'un faisceau d'atomes ou molécules neutres sont adaptés pour produire un faisceau ayant une énergie comprise entre 50 eV et 5 keV et une divergence non supérieure à 0,05° ; et

- en ce que lesdits moyens de génération d'un faisceau d'atomes ou molécules neutres sont adaptés pour diriger ledit faisceau vers ladite surface à caractériser avec un angle d'incidence non supérieur à 10° par rapport au plan de ladite surface ;

de telle manière qu'une figure de diffraction desdits atomes ou molécules neutres diffusés vers l'avant par ladite surface à caractériser soit détectable par lesdits moyens de détection sensibles en position.

Selon des modes de réalisation particuliers du dispositif de l'invention :

- Lesdits moyens de génération d'un faisceau d'atomes ou molécules neutres peuvent être adaptés pour produire un faisceau ayant une énergie comprise entre 100 eV et 1keV, et de préférence entre 100 eV et 700 eV.

- Lesdits moyens de génération d'un faisceau d'atomes ou molécules neutres peuvent être adaptés pour produire un faisceau ayant une énergie comprise entre 100 eV et 2keV, et de préférence entre 100 eV et 1 keV.

- Lesdits moyens de génération d'un faisceau d'atomes ou molécules neutres peuvent être adaptés pour produire un faisceau ayant une dispersion d'énergie non supérieure à 5%.

- Lesdits moyens de génération d'un faisceau d'atomes ou molécules neutres peuvent être adaptés pour diriger ledit faisceau vers ladite surface à caractériser avec un angle d'incidence compris entre 0,5 et 3° par rapport au plan de la surface.

- L'angle d'incidence et l'énergie dudit faisceau d'atomes ou molécules peuvent être choisis de telle manière que l'énergie associée au mouvement dans une direction perpendiculaire à la surface soit inférieure ou égale à 1 eV.

- Lesdits moyens de génération d'un faisceau d'atomes ou molécules neutres peuvent être adaptés pour générer un faisceau constitué de particules ayant une masse atomique comprise entre 1 et 20 au, et plus particulièrement constitué d'une espèce chimique choisie parmi H, $H_2$ et $^3$He ou leurs isotopes.

- Lesdits moyens de génération d'un faisceau d'atomes ou molécules neutres peuvent comprendre : un moyen de génération d'un faisceau d'ions atomiques ou moléculaires ; un moyen de neutralisation dudit faisceau d'ions atomiques ou moléculaires ; et un moyen de collimation du faisceau d'atomes ou molécules neutres obtenu par neutralisation dudit faisceau d'ions atomiques ou moléculaires.

- Lesdits moyens de génération d'un faisceau d'atomes ou molécules neutres peuvent comprendre également un moyen de filtrage en masse desdits ions atomiques ou moléculaires.

- Lesdits moyens de génération d'un faisceau d'atomes ou molécules neutres peuvent comprendre également un moyen d'hachage pour générer un faisceau pulsé.

- Lesdits moyens de détection sensibles en position peuvent présenter également une sensibilité temporelle, avec une résolution non supérieure à 50 ns, et de préférence non supérieure à 10 ns, de manière à permettre une détermination de la perte d'énergie des atomes ou molécules neutres dudit faisceau suite à la diffusion par ladite surface par mesure du temps de vol.

- Le dispositif peut comprendre également un moyen de détection secondaire d'atomes ou molécules neutres ou ionisés, ledit moyen de détection secondaire ayant une résolution temporelle non supérieure à 1 μs, de préférence non supérieure à 100 ns et d'une manière encore préférée non supérieure à 10 ns, et étant agencé de manière à détecter des atomes ou molécules neutres ou ionisés qui quittent la surface à caractériser suivant une trajectoire qui forme avec ladite surface un angle supérieur à l'angle de réflexion spéculaire dudit faisceau d'atomes ou molécules neutres.

Un autre objet de l'invention est une machine pour épitaxie par jets moléculaires comportant un dispositif de caractérisation de surface selon l'une des revendications précédentes, agencé pour caractériser la surface d'un cristal en cours de croissance.

Encore un autre objet de l'invention est un procédé de caractérisation de surfaces comportant les étapes de :

- diriger un faisceau d'atomes ou molécules neutres sur la surface à caractériser ; et

- détecter de manière sensible à la position les atomes ou molécules neutres dudit faisceau, diffusés vers l'avant par ladite surface à caractériser ;

caractérisé en ce que
ledit faisceau d'atomes ou molécules neutres a une énergie comprise entre 50 eV et 5 keV ; et
en ce que l'angle d'incidence dudit faisceau sur ladite surface à caractériser n'est pas supérieur à 10° par rapport au plan de ladite surface,
de telle manière qu'au moins une partie desdits atomes ou molécules neutres diffusés vers l'avant soit diffractée par ladite surface à caractériser.

Selon des modes de réalisation particuliers du procédé de l'invention :

- Ledit faisceau d'atomes ou molécules neutres peut avoir une énergie comprise entre 100 eV et 1 keV et de préférence entre 100 et 700 eV.

- Ledit faisceau d'atomes ou molécules neutres peut avoir une énergie comprise entre 100 eV et 2 keV et de préférence entre 100 eV et 1 keV.

- Ledit faisceau d'atomes ou molécules neutres peut avoir une dispersion d'énergie non supérieure à 5%.

- L'angle d'incidence dudit faisceau sur ladite surface à caractériser peut être compris entre 0,5 et 3° par rapport au plan de la surface.

- L'angle d'incidence et l'énergie dudit faisceau d'atomes ou molécules peuvent être choisis de telle manière que l'énergie associée au mouvement dans une direction perpendiculaire à la surface soit inférieure ou égale à 1 eV.

- Ledit faisceau peut être constitué de particules ayant une masse atomique comprise entre 1 et 20 au, et en particulier d'une espèce chimique choisie parmi H, $H_2$ et $^3He$ ou leurs isotopes.

- Le procédé peut comporter également une étape de détermination d'au moins un paramètre cristallographique de ladite surface à caractériser à partir d'une figure de diffraction détectée desdits atomes ou molécules neutres diffusés vers l'avant par ladite surface à caractériser.

- Le procédé peut être mis en oeuvre lors de la fabrication d'un cristal par épitaxie par jets moléculaires et comporter également : une étape d'observation d'un comportement oscillatoire dans le temps de ladite figure de diffraction ; et une étape d'extraction d'une information relative à la croissance par épitaxie de couches atomiques successives formant ledit cristal à partir de ladite observation d'un comportement oscillatoire dans le temps de ladite figure de diffraction

D'autres caractéristiques, détails et avantages de l'invention ressortiront à la lecture de la description faite en référence aux dessins annexés donnés à titre d'exemple et qui représentent, respectivement :

- la figure 1A, un schéma général d'un dispositif et d'un procédé selon l'invention ;

- la figure 1B, une illustration de la condition de Bragg pour la diffraction d'une onde par un cristal ;

- la figure 2, un exemple de figure de diffraction d'atomes en incidence rasante, obtenue par le procédé de l'invention ;

- les figures 3A et 3B, des schémas d'un moyen de génération d'un faisceau atomique selon un premier et un deuxième mode de réalisation de l'invention respectivement ;

- la figure 4, une machine pour épitaxie par faisceaux moléculaires équipée d'un dispositif selon l'invention; et

- la figure 5, un spectre de perte d'énergie de particules neutres diffuées par une surface.

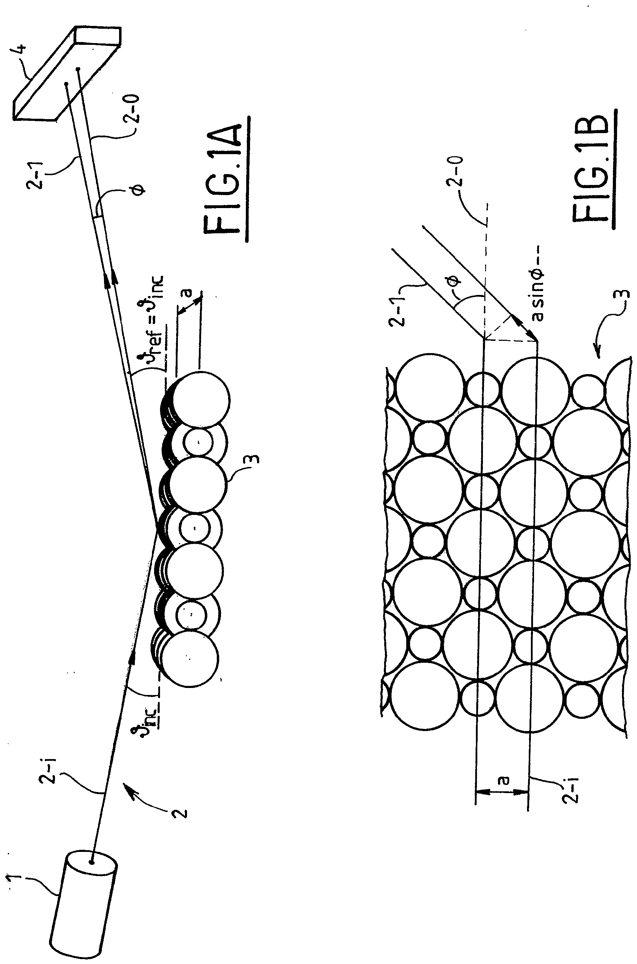

Comme représenté sur la figure 1A, un dispositif selon l'invention se compose essentiellement d'un moyen 1 de génération d'un faisceau 2 d'atomes ou molécules neutres et d'un moyen de détection 3 sensible en position dudit faisceau d'atomes ou molécules neutres.

Le faisceau 2 est dirigé vers une surface 3 à caractériser selon un angle d'incidence $\theta_{inc}$, éventuellement variable, non supérieur à 10° environ (incidence rasante) ; ici et dans la suite, les angles sont mesurés par rapport au plan de la surface cible 3. Comme dans la technique RHEED, l'espace directement au-dessus de la surface 3 reste libre, ce qui permet notamment une croissance par épitaxie par faisceaux moléculaires simultanément à la mesure.

Les atomes ou molécules neutres du faisceau 2 sont réfléchis par ladite surface 3, avec un angle de réflexion $\theta_{ref} \approx \theta_{inc}$; en même temps ils subissent une diffraction dans une direction azimutale, c'est à dire parallèle à la surface 3. Sur la figure 1, le faisceau atomique ou moléculaire incident est indiqué par la référence 2-i, le faisceau spéculaire par 2-0 (car il s'agit de l' « ordre zéro » de diffraction) et le premier faisceau non spéculaire par 2-1 (premier ordre de diffraction). Comme en RHEED l'angle $\phi$, formé par les projections sur un plan parallèle à celui de la surface 3 du faisceau diffracté au premier ordre 2-1 et du faisceau diffracté à l'ordre zéro 2-0, est lié au paramètre de maille a de la surface cristalline 3 dans la direction transversale par rapport au mouvement des atomes ou molécules incidents par la relation de Bragg, représentée graphiquement sur la figure 1B :

$$a \, sin \, \phi = n\lambda$$

avec n entier, dont on déduit

$$\phi = arcsin\left(\frac{\lambda}{a}\right)$$

pour le premier ordre de diffraction, où $\lambda$ est la longueur d'onde de de Broglie des particules incidentes.

En fait, en conditions d'incidence rasante, on peut considérer que le mouvement des particules dans une direction normale à la surface 3 est découplé du mouvement longitudinal, parallèle à ladite surface 3, et que ce qu'on observe est la diffraction de la composante normale de l'onde de matière par le potentiel de la surface transverse au mouvement. Ainsi, même lorsque l'énergie totale $E_0$ de la particule est de l'ordre du keV, son énergie normale $E_n = E_0 \, sin^2 \, \theta_{inc}$ peut être inférieure à 1 eV, ce qui correspond à une longueur d'onde normale $\lambda_n = \frac{h}{\sqrt{2mE_n}}$ (h étant la constante de Planck et m la masse desdites particules) du même ordre de grandeur que le paramètres de maille a à mesurer. Par exemple, dans le cas d'atomes d'hydrogène H d'une énergie de 500 eV avec un angle d'incidence de 1,4°, on trouve $E_n$=0,3 eV ce qui correspond à une longueur d'onde normale $\lambda$=0,53 Å, à comparer au paramètre de maille d'une surface telle que celle de NaCl, a=5,64 Å.

Les faisceaux diffractés 2-0 et 2-1 sont détectés, à distance de la surface 3, par le moyen de détection sensible à la position 4, qui forme une image de la figure de diffraction, ce qui permet de mesurer l'angle $\phi$ et de déterminer par conséquent le paramètre de maille a. Contrairement au cas des atomes thermiques de la technique HAS/TEAS, les particules à haute énergie utilisées dans le procédé de l'invention peuvent être détectées simplement, par exemple par des galettes à micro-canaux (MCP, « microchannel plates ») couplées à un écran phosphore qui est à son tour imagé par une caméra CCD.

Bien entendu, la figure 1A constitue une simplification, car en général plusieurs ordres de diffraction sont simultanément observés, ainsi qu'un fond incohérent dû aux défauts de structure de la surface (marches, atomes adsorbés, etc.), ainsi qu'aux vibrations thermiques.

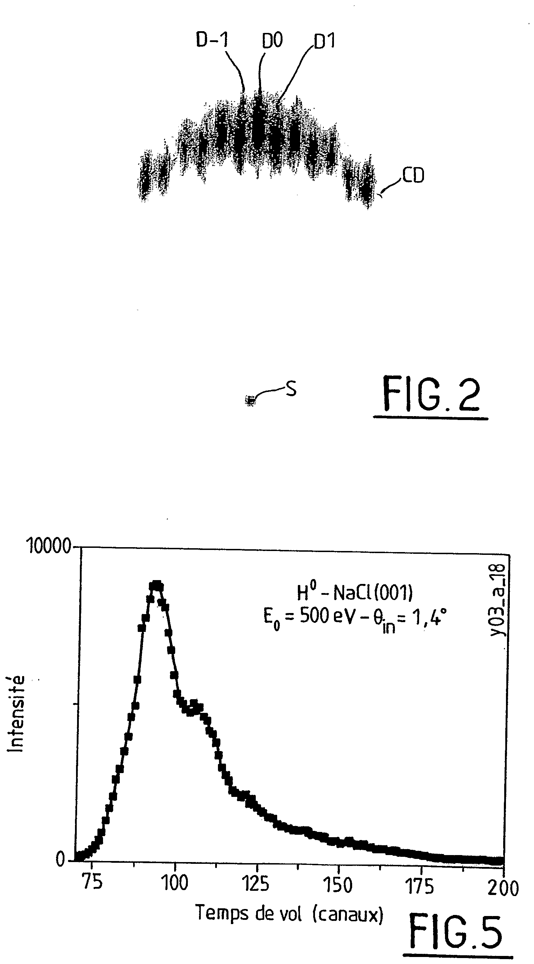

La figure 2 montre un exemple réel de figure de diffraction obtenue en dirigeant des molécules de $H_2$ d'une énergie de 400 eV sur une surface de ZnSe (001) suivant la direction cristallographique [1 -1 0] avec un angle d'incidence de 1,1°. Plusieurs ordres de diffraction sont visibles ; les références D0, D-1 et D1 mettent en évidence la tache centrale correspondant à l'ordre zéro, et les deux premiers ordres disposés symétriquement autour d'elle. L'espacement entre les taches de diffraction renseigne sur la périodicité du réseau cristallin de la surface (paramètre de maille a), cela est vrai pour toutes les techniques de diffraction, voir par exemple l'ouvrage de D. P. Woodruff et T. A. Delchar « Modern techniques of surface science », Cambridge University Press, 1986, tandis que leur intensité relative renseigne sur la forme du potentiel d'interaction entre le projectile et la surface. On observe que les taches de diffraction sont disposées le long d'une courbe CD, dont la forme dépend de la forme dudit potentiel d'interaction, de l'énergie normale $E_n$ du projectile et de la température. Pour un projectile non réactif, la courbe CD est un arc de cercle dont le centre passe par le plan projeté de la surface.

Il est possible d'étudier finement la structure du potentiel de surface en observant la variation de l'intensité relative des pics de diffraction et de la forme de la courbe CD avec l'angle d'incidence $\theta_{inc}$ (« rocking curves »). Les techniques d'inversion qui permettent de reconstruire le potentiel de surface à partir de ces observations sont essentiellement les mêmes que celles utilisées dans les études de diffraction d'atomes neutres thermiques, voir par exemple l'article de R. I. Masel et al « Quantum scattering from a sinusoidal hard wall: atomic diffraction from solid surfaces », Phys. Rev. B, 12, 5545, 1975.

On observe, dans la partie inférieure de la figure 2, une tache S, produite par les particules du faisceau 2 qui ont survolé la surface 3 sans interagir. L'observation de la tache S n'apporte aucune information directement liée aux propriétés de ladite surface, mais peut être exploitée pour déterminer les angles d'incidence et diffusion et pour calibrer la perte d'énergie dans les mesures de temps de vol dans le cas d'un faisceau pulsé.

L'observation d'une figure de diffraction exploitable à des fins cristallographiques n'est généralement possible que si les conditions de travail, en particulier la nature et l'énergie des particules constituant le faisceau 2, l'angle d'incidence $\theta_{inc}$ dudit faisceau sur la surface 3, sa divergence et sa largeur, sont choisies de manière adaptée. De préférence, ces conditions de travail sont choisies de telle sorte que les pics de Bragg soient bien résolus. Cependant, même si l'énergie normale des projectiles est augmentée légèrement au-delà du point à partir duquel les pics de Bragg ne sont plus résolus, un motif d'interférence subsiste sous la forme d'une modulation de basse fréquence spatiale du profil de diffusion ; cette figure de diffraction imparfaitement résolue porte encore une information caractéristique de la forme du potentiel de surface.

En ce qui concerne la nature du projectile, peuvent être utilisés des atomes ou des petites particules ayant une masse comprise entre 1 unité atomique (H) et 20 unités atomiques ($^{20}$Ne). Les projectiles légers sont généralement préférés, car ils ont une longueur d'onde plus grande à énergie égale. En particulier H, $H_2$ et $^3$He et leurs isotopes s'avèrent des choix particulièrement avantageux. En effet, H est le projectile de plus faible masse, et son utilisation permet d'étudier le potentiel d'interaction de la surface avec l'hydrogène, ce qui est très intéressant dans des nombreuses applications. $^3$He sera préféré lorsqu'on souhaite disposer d'un projectile chimiquement inerte tandis que $H_2$, dont la masse et la réactivité sont intermédiaires entre celles de H et de $^3$He, peut constituer une solution de compromis. En général, He ($^3$He ou $^4$He) constitue le projectile préféré.

L'énergie $E_0$ du faisceau peut être comprise entre 50 eV et 5 keV environ, de préférence entre 100 eV et 2 keV et d'une manière encore préférée entre 100 eV et 1 keV. Il est préférable que la dispersion de l'énergie du faisceau soit inférieure ou égale à 5%, de préférence inférieure ou égale à 2%.

L'angle d'incidence par rapport au plan de la surface, $\theta_{inc}$, doit être inférieur ou égale à 10°, de préférence compris entre 0,5° et 3°.

L'énergie et l'angle ne sont pas des paramètres strictement indépendants : en effet, il est préférable que l'énergie normale $E_n = E_0 \sin^2 \theta_{inc}$ soit inférieure ou égale à 1 eV.

La divergence du faisceau doit être minimisée car elle a tendance à brouiller les pics de diffraction : typiquement pour obtenir des images de bonne qualité il est nécessaire d'obtenir une divergence non supérieure à 0,05°.

Il est également avantageux que la taille du faisceau soit inférieure ou égale à 1 mm, de préférence comprise entre 10 et 300 $\mu$m environ. En effet, la taille du faisceau dans une direction parallèle à la surface a une influence directe sur la taille des taches de diffraction au niveau du détecteur 3 ; si le faisceau est trop large, ces taches ont tendance à se superposer et il en résulte un brouillage de la figure de diffraction. La largeur du faisceau dans une direction normale à la surface est moins critique, mais il faut considérer que, du fait de l'incidence rasante, la projection sur la surface de cette dimension du faisceau est étirée d'un facteur $1/\sin\theta_{inc}$, et peut donc facilement dépasser la taille de l'échantillon. Il est donc préférable de la limiter également à une valeur inférieure ou égale à 1 mm. En règle générale, on préfère utiliser des faisceaux à section au moins approximativement circulaire.

Le flux ne doit pas nécessairement être très important : avec un flux de quelques centaines d'atomes par seconde seulement, quelques minutes d'exposition suffisent pour obtenir des images directement exploitables.

La température de l'échantillon est un autre paramètre qui doit être pris en considération, car l'agitation thermique des atomes de la surface affecte négativement l'efficacité de la diffraction. Il est donc avantageux que l'échantillon soit maintenu à température ambiante (autour de 300 K) au cours de la mesure. Il n'est généralement pas nécessaire de refroidir l'échantillon à des températures cryogéniques, bien que cela puisse améliorer la qualité de la figure de diffraction obtenue. Si la température est imposée, par exemple par le procédé de croissance par épitaxie, il est possible de limiter l'effet de l'agitation thermique en choisissant un angle d'incidence plus petit : en effet, plus l'incidence est rasante, plus la diffusion a lieu loin de la surface, et donc moins le projectile est sensible aux défauts de périodicité induits par l'agitation thermique.

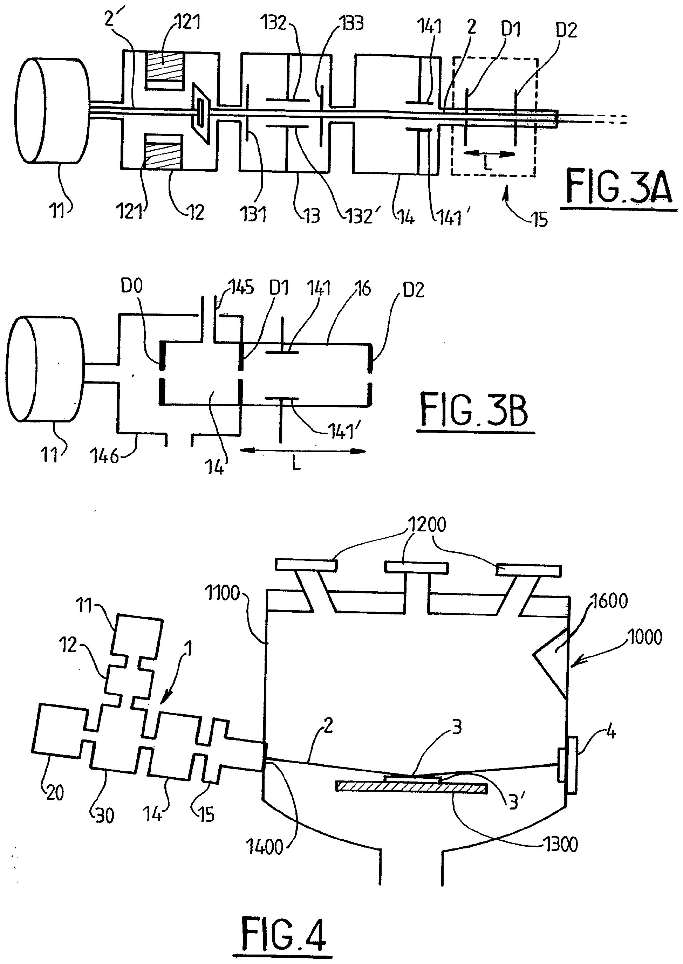

Un moyen de génération d'un faisceau d'ions ou molécules adapté à la mise en oeuvre de l'invention est représenté sur la figure 3A. Ce dispositif est essentiellement constitué d'un générateur d'un faisceau 2' d'ions atomiques ou moléculaires 11, un neutraliseur 14 et un collimateur 15.

Il existe dans le commerce plusieurs types de sources d'ions 11 adaptés à la mise en ouvre de l'invention, fournissant des faisceaux d'ions ayant une énergie comprise entre quelques eV et quelques keV. A titre d'exemple on peut citer les sources ECR (résonance cyclotronique d'électrons) et les sources à décharge. La source d'ions 11 comprend un ensemble d'électrodes permettant d'accélérer les ions à l'énergie souhaitée par application d'un champ électrostatique, ainsi que des optiques électrostatiques de focalisation.

Si le faisceau d'ions généré par la source 11 n'est pas suffisamment pur du point de vue chimique et isotopique, ou s'il contient des ions d'états de charge différents, il peut être dirigé vers un filtre de masse 12 qui utilise un champ magnétique généré par un aimant 121 et une fente 122 pour sélectionner des particules ayant un rapport masse sur charge déterminé. Bien que cela ne soit pas visible sur la figure 3A, un filtre de masse magnétique de ce type n'est pas en ligne droite et introduit nécessairement une déviation du faisceau 2' d'ions.

En variante, il est possible d'utiliser un filtre de Wien ou tout autre filtre de masse adapté.

Si l'on souhaite obtenir un faisceau pulsé on peut prévoir, indifféremment en amont ou en aval du filtre de masse éventuel, un hacheur 13. Dans un mode de réalisation de l'invention, le dispositif comporte une fente d'entrée 131 pour la mise en forme du faisceau, deux électrodes en forme de plaque 132, 132' se faisant face et un orifice de sortie 133. En appliquant un champ électrique variable aux électrodes 132, 132' le faisceau d'ions balaye l'orifice de sortie ; si le champ appliqué aux électrodes est périodique, on obtient un faisceau de sortie pulsé.

La charge électrique des ions permet de les accélérer, sélectionner et pulser beaucoup plus facilement que des particules neutres. Le faisceau d'ions 2' peut ensuite être neutralisé par échange de charge dans une cellule 14 remplie de gaz. Idéalement, le gaz utilisé dans la cellule 14 est constitué des mêmes espèces chimiques du faisceau 2 afin d'optimiser l'échange de charge par capture résonante ; la pression $P_{14}$ à l'intérieur de la cellule dépend de sa longueur $L_{14}$ et en général on pose $P_{14}$x $L_{14} \leq 10^{-3}$mbar·cm. A la sortie de la cellule 14, un champ électrostatique appliqué par des électrodes 141, 141' permet de dévier les ions restants, de telle manière qu'uniquement un faisceau 2 d'atomes ou molécules neutres quitte la cellule 14.

Le faisceau atomique ou moléculaire sortant du neutraliseur 14 présente une divergence trop élevée pour que l'observation de la diffraction par la surface cible 3 soit possible, et doit donc être collimaté. Un collimateur 15 peut être simplement constitué d'un premier et d'un deuxième diaphragme, D1 et D2, de préférence circulaires, ayant des diamètres $\varnothing_{D1}$ et $\varnothing_{D2}$ du même ordre de grandeur, alignés sur l'axe du faisceau et espacés d'une distance L. Des simples considérations géométriques montrent que la divergence, définie comme le demi angle au sommet, du faisceau de sortie est donnée par Div=$(\varnothing_{D1}+\varnothing_{D2})$/2L. On peut par exemple prendre $\varnothing_{D1}$ et $\varnothing_{D2}$ de l'ordre de 100 à 200 $\mu$m et L compris entre 20 et 30 cm.

La figure 3B montre une variante simplifiée, et beaucoup plus compacte, d'un moyen 1 de génération d'un faisceau atomique ou moléculaire. Ce dispositif simplifié ne comporte ni de filtre de masse 12, ni d'hacheur 13. Dans le moyen 1 de génération d'un faisceau atomique ou moléculaire de la figure 3B, la cellule de neutralisation 14 est constituée par une section d'un élément tubulaire 16 comprise entre deux diaphragmes D0 et D1, le diamètre du diaphragme D0 étant beaucoup plus grand que celui du diaphragme D1. La cellule 14 comprend une entrée de gaz 145 et est entourée par une enceinte 146 reliée à un système de pompage à vide non représenté ; les électrodes 141, 141' destinées à dévier les ions non recombinés sont disposées à l'intérieur dudit élément tubulaire 16, en aval du diaphragme D1. Ce dernier, en plus de délimiter la cellule de neutralisation 14, fait partie du collimateur 15, tout comme le diaphragme, D2 situé à la sortie de l'élément tubulaire 15. Comme il ne comporte pas de hacheur 13 disposé en amont de la cellule de neutralisation 14, le dispositif de la figure 3B ne peut pas produire un faisceau 2 d'atomes ou molécules neutres pulsé. Il peut néanmoins produire un faisceau ionique 2' puisé : pour cela il suffit d'évacuer la cellule de neutralisation 14 et d'appliquer une tension pulsée aux électrodes 141, 141' de manière à les utiliser comme hacheur.

La figure 4 montre une machine pour épitaxie par faisceaux moléculaires 1000 équipée d'un dispositif de caractérisation de surfaces selon l'invention. La machine 1000 est essentiellement constituée d'une enceinte 1100 reliée à un système de pompage (non représenté) qui produit un ultravide. Dans l'enceinte 1100 débouchent des cellules d'effusion 1200 qui produisent des faisceaux moléculaires. En face de ces cellules 1200 est situé un support 1300 pour un substrat 3' sur lequel doit être déposée par épitaxie la surface 3.

A une entrée 1400 de l'enceinte 1000 est connecté un moyen de génération 1 d'un faisceau atomique ou moléculaire 2 à haute énergie du type représenté sur la figure 3A, mais dans lequel l'hacheur 13 a été remplacé par un déflecteur électrostatique couplé en entrée également à un canon à électrons RHEED 20. De cette manière, l'utilisateur peut choisir de caractériser la surface à l'aide du faisceau atomique ou moléculaire 2, conformément à l'invention, ou par la technique RHEED traditionnelle, sans qu'il soit nécessaire de prévoir une entrée supplémentaire dans l'enceinte 1000. Plus précisément, lorsqu'on veut effectuer une caractérisation RHEED, seul le canon à électron 20 est activé, tandis que la source d'ions 11 et le déflecteur 30 restent inactifs, et la cellule de neutralisation 14 est évacuée. Inversement, lorsqu'on veut effectuer une caractérisation par diffraction d'atomes ou molécules neutres, le canon à électrons 20 reste inactif, tandis que la source d'ions 11 et le déflecteur 30 sont actifs et la cellule de neutralisation est remplie de gaz. En activant et désactivant périodiquement le déflecteur 30 on peut obtenir un faisceau d'atomes ou molécules puisé : dans ce cas le déflecteur 30 peut être utilisé comme hacheur.

Un moyen de détection 4 sensible en position, constitué par une galette à microcanaux couplée à un écran fluorescent, est également agencé dans la paroi de l'enceinte 1100, dans une position opposée à celle du moyen de génération 1 par rapport à la surface 3. Le moyen 4 est également adapté à la détection d'électrons, il est donc compatible avec la technique RHEED.

En variante, le dispositif de caractérisation de l'invention peut remplacer complètement un dispositif RHEED.

Il est très avantageux que l'angle d'incidence $\theta_{inc}$ du faisceau 2 sur la surface 3 puisse être varié, par exemple dans la plage 0,5° - 10°, afin de permettre une caractérisation plus complète de ladite surface (technique dite des « rocking curves »). Cela peut être obtenu, par exemple, en montant le moyen de génération 1 à l'aide d'un mécanisme pivotant motorisé. En variante, si seulement un contrôle qualitatif de la qualité de la surface 3 est requis, l'angle $\theta_{inc}$ peut être fixe.

Comme cela a été montré plus haut, le dispositif de l'invention permet la surveillance en temps réel de la croissance de surfaces conductrices ou diélectriques, alors que la technique RHEED est mal adaptée aux surfaces diélectriques. De plus, la diffraction d'atomes rapides en incidence rasante permet d'obtenir des figures de diffraction plus faciles à interpréter que les figures RHEED, en raison du faible pouvoir de pénétration des atomes ou molécules au-dessous de la surface à étudier.

Mais le dispositif et le procédé de l'invention ne se limitent pas à fournir des informations de nature cristallographique : ils permettent une caractérisation des surfaces bien plus complète.

En effet, en puisant le faisceau d'atomes incident à l'aide de l'hacheur électrostatique 13 représenté sur la figure 3A il est également possible d'étudier les processus de diffusion inélastique entre les particules neutres et la surface 3. Pour ce faire, il est nécessaire que le détecteur 4 présente une résolution temporelle suffisante pour permettre une mesure d'énergie des particules diffusées par temps de vol, par exemple de l'ordre de 50 ns ou moins, et de préférence de l'ordre de 10 ns ou moins. A titre d'exemple, la figure 5 montre un spectre de perte d'énergie des particules diffusées lors de l'interaction d'atomes d'hydrogène d'une énergie de 500 eV avec une surface de NaCl (0 0 1), l'incidence se faisant dans la direction cristallographique [1 0 0] avec un angle $\theta_{inc}$=1,4°. L'axe des abscisses de la figure 5 porte le temps de vol des atomes, exprimé en unités arbitraires ; un calibrage de l'instrument permet d'associer à chaque temps de vol une valeur de l'énergie des atomes après diffusion par la surface. Avantageusement, il est possible de compléter cette mesure par une détection d'électrons émis par la surface lors de l'interaction inélastique.

De cette manière il est possible, par exemple, d'étudier l'affinité d'une surface avec l'hydrogène atomique H, utilisé comme projectile. Cela est important du point de vue technologique car H est très facilement adsorbé par les surfaces et constitue un obstacle à la croissance par épitaxie par faisceaux moléculaires.

Une technique similaire peut être utilisée pour déterminer la concentration de particules légères adsorbées sur la surface 3. Ces particules, principalement des atomes d'hydrogène, peuvent être éjectées de la surface 3 suite à une collision binaire avec les projectiles du faisceau 2. La mesure du temps de vol de ces particules éjectées permet de déterminer leur masse, et donc de les identifier. Les espèces lourdes présentes sur la surface ne peuvent pas être éjectées par les projectiles du faisceau 2, beaucoup plus légers ; par contre, elles produisent une diffusion à grand angle avec une perte d'énergie desdits projectiles. Dans ce cas, c'est la mesure du temps de vol des projectiles diffusés qui permet de déterminer la masse des particules adsorbées, et donc de les identifier.

Sur la figure 4, un détecteur secondaire permettant la mesure du temps de vol des particules éjectées de la surface 3 suite à une collision avec un projectile du faisceau 2, ainsi que des projectiles dudit faisceau diffusés à grand angle, est représenté schématiquement sous la référence 1600. Le détecteur 1600 doit avoir une résolution temporelle non supérieure à 1 $\mu$s, de préférence non supérieure à 100 ns et d'une manière encore préférée non supérieure à 10 ns. En outre il est agencé de manière à détecter des atomes ou molécules neutres ou ionisés qui quittent la surface à caractériser suivant une trajectoire qui forme avec ladite surface 3 un angle supérieur à l'angle de réflexion spéculaire du faisceau d'atomes ou molécules neutres, par exemple un angle d'environ 30°.

L'identification des particules adsorbées peut être également effectuée en utilisant des ions en tant que projectiles. Cela permet d'utiliser, même dans cette application, le moyen de génération de faisceau de la figure 3B qui ne peut pas produire un faisceau neutre pulsé.

Les techniques d'identification des particules adsorbées décrites ci-dessus sont connues en soi, voir par exemple les articles suivants :

W. Hayami et al. « Structural analysis of the HfB2(0001) surface by impact-collision ion scattering spectroscopy », Surface Science 415 (1998), 433 - 437 ;
M. Shi et al. « Time-of-flight scattering and recoiling spectrometry. III. The structure of hydrogen on the W(211) surface », Phys. Rev. B, 40, 10163 (1989) ; et
Y. Wang et al « Structure of the Si{100} surface in the clean (2x1), (2x1)-H monohydride, (1x1)-H dihydride, and c(4x4)-H phases », Phys. Rev. B, 48, 1678 (1993).

Cependant, ces techniques ne sont généralement pas mises en oeuvre dans un environnement industriel car elles nécessiteraient des équipements supplémentaires en plus du dispositif d'analyse RHEED qui est toujours présent. Grâce à l'invention, un même moyen 1 de génération d'un faisceau atomique ou moléculaire peut être utilisé aussi bien pour effectuer des mesures de diffraction de surface que pour identifier les particules adsorbées. Avec une augmentation négligeable de la complexité de l'instrument (ajout du détecteur secondaire 1600) il est donc possible d'effectuer une caractérisation de la surface 3 bien plus complète qu'en utilisant la technique RHEED seule.

En effet, l'identification des particules adsorbées se combine avantageusement avec l'observation des figures de diffraction pour une surveillance en temps réel de la croissance de cristaux par épitaxie. Selon un mode de réalisation particulier du procédé de l'invention, l'étude des oscillations des pics de diffraction permet de suivre l'évolution du dépôt de couches atomiques successives, comme cela est fait communément en utilisant la technique RHEED, tandis que la détection des particules quittant la surface 3 suite à une collision avec un atome ou molécule du faisceau 2 (ou un ion du faisceau 2'), ainsi que des projectiles diffusés à des grands angles suite à une collision avec une particule adsorbée lourde, permet de connaître le niveau de contamination de cette même surface. Comme le hachage du faisceau 2 ou 2' réduit considérablement son flux, et rend donc peu visibles les figures de diffraction, les deux types de mesure seront généralement alternés dans le temps.

**Revendications**

1. Dispositif pour la caractérisation de surfaces comportant :

  - des moyens (1) de génération d'un faisceau (2) d'atomes ou molécules neutres, agencés pour diriger ledit faisceau (2) vers une surface (3) à caractériser ; et
  - des moyens (4) de détection sensibles en position pour détecter les atomes ou molécules neutres dudit faisceau (2), diffusés vers l'avant par ladite surface (3) à caractériser ;

  **caractérisé en ce que**

  - lesdits moyens (1) de génération d'un faisceau (2) d'atomes ou molécules neutres sont adaptés pour produire un faisceau (2) ayant une énergie comprise entre 50 eV et 5 keV et une divergence non supérieure à 0,05° ; et
  - **en ce que** lesdits moyens (1) de génération d'un faisceau d'atomes ou molécules neutres sont adaptés pour diriger ledit faisceau (2) vers ladite surface (3) à caractériser avec un angle d'incidence non supérieur à 10° par rapport au plan de ladite surface (3) ;

  de telle manière qu'une figure de diffraction desdits atomes ou molécules neutres diffusés vers l'avant par ladite surface (3) à caractériser soit détectable par lesdits moyens (4) de détection sensibles en position.

2. Dispositif selon la revendication 1, dans lequel lesdits moyens (1) de génération d'un faisceau d'atomes ou molécules neutres sont adaptés pour produire un faisceau (2) ayant une énergie comprise entre 100 eV et 2keV, et de préférence entre 100 eV et 1 keV.

3. Dispositif selon l'une des revendications précédentes, dans lequel lesdits moyens (1) de génération d'un faisceau d'atomes ou molécules neutres sont adaptés pour produire un faisceau (2) ayant une dispersion d'énergie non supérieure à 5%.

4. Dispositif selon l'une des revendications précédentes dans lequel l'angle d'incidence ($\theta_{inc}$) et l'énergie dudit faisceau (2) d'atomes ou molécules sont choisis de telle manière que l'énergie associée au mouvement dans une direction perpendiculaire à la surface (3) soit inférieure ou égale à 1 eV.

5. Dispositif selon l'une des revendications précédentes dans lequel lesdits moyens (1) de génération d'un faisceau d'atomes ou molécules neutres sont adaptés pour générer un faisceau (2) constitué de particules ayant une masse atomique comprise entre 1 et 20 au.

6. Dispositif selon l'une des revendications précédentes dans lequel lesdits moyens (1) de génération d'un faisceau d'atomes ou molécules neutres comprennent :

  - un moyen (11) de génération d'un faisceau (2') d'ions atomiques ou moléculaires ;
  - un moyen (14) de neutralisation dudit faisceau d'ions atomiques ou moléculaires ; et
  - un moyen (15) de collimation du faisceau (2) d'atomes ou molécules neutres obtenu par neutralisation dudit faisceau (2') d'ions atomiques ou moléculaires

7. Dispositif selon la revendication 6, dans lequel lesdits moyens (1) de génération d'un faisceau d'atomes ou molécules neutres comprennent également un moyen (12) de filtrage en masse desdits ions atomiques ou moléculaires.

8. Dispositif selon la revendication 6 ou 7, dans lequel lesdits moyens (1) de génération d'un faisceau d'atomes ou molécules neutres comprennent un moyen (13) de hachage pour générer un faisceau (2) pulsé.

9. Dispositif selon la revendication 8, dans lequel lesdits moyens (4) de détection sensibles en position présentent également une sensibilité temporelle, avec une résolution non supérieure à 50 ns, et de préférence non supérieure à 10 ns, de manière à permettre une détermination de la perte d'énergie des atomes ou molécules neutres dudit faisceau (2) suite à la diffusion par ladite surface (3) par mesure du temps de vol.

10. Dispositif selon l'une des revendications précédentes, comprenant également un moyen de détection secondaire (1600) d'atomes ou molécules neutres ou ionisés, ledit moyen de détection secondaire (1600) ayant une résolution temporelle non supérieure à 1 $\mu$s, de préférence non supérieure à 100 ns et d'une manière encore préférée non supérieure à 10 ns, et étant agencé de manière à détecter des atomes ou molécules neutres ou ionisés qui quittent la surface (3) à caractériser suivant une trajectoire qui forme avec ladite surface (3) un angle supérieur à l'angle de réflexion spéculaire dudit faisceau (2) d'atomes ou molécules neutres.

**11.** Machine (1000) pour épitaxie par jets moléculaires comportant un dispositif de caractérisation de surface selon l'une des revendications précédentes, agencé pour caractériser la surface (3) d'un cristal en cours de croissance.

**12.** Procédé de caractérisation de surfaces comportant les étapes de :

- diriger un faisceau (2) d'atomes ou molécules neutres sur la surface (3) à caractériser ; et
- détecter de manière sensible à la position les atomes ou molécules neutres dudit faisceau (2), diffusés vers l'avant par ladite surface (3) à caractériser ;

**caractérisé en ce que**

- ledit faisceau (2) d'atomes ou molécules neutres a une énergie comprise entre 50 eV et 5 keV et une divergence non supérieure à 0,05° ; et
- **en ce que** l'angle d'incidence ($\theta_{inc}$) dudit faisceau (2) sur ladite surface (3) à caractériser n'est pas supérieur à 10° par rapport au plan de ladite surface,

de telle manière qu'au moins une partie desdits atomes ou molécules neutres diffusés vers l'avant soit diffractée par ladite surface (3) à caractériser.

**13.** Procédé de caractérisation de surfaces selon la revendication 12, dans lequel ledit faisceau (2) d'atomes ou molécules neutres a une énergie comprise entre 100 eV et 2keV, et de préférence entre 100 eV et 1 keV.

**14.** Procédé de caractérisation de surfaces selon l'une des revendications 12 ou 13, dans lequel ledit faisceau (2) d'atomes ou molécules neutres a une dispersion d'énergie non supérieure à 5%.

**15.** Procédé de caractérisation de surfaces selon l'une des revendications 12 à 14, dans lequel l'angle d'incidence ($\theta_{inc}$) et l'énergie dudit faisceau (2) d'atomes ou molécules sont choisis de telle manière que l'énergie associée au mouvement dans une direction perpendiculaire à la surface (3) soit inférieure ou égale à 1 eV.

**16.** Procédé de caractérisation de surfaces selon l'une des revendications 12 à 15, dans lequel ledit faisceau (2) est constitué de particules ayant une masse atomique comprise entre 1 et 20 au.

**17.** Procédé selon l'une des revendications 12 à 16, comportant également une étape de détermination d'au moins un paramètre cristallographique de ladite surface (3) à caractériser à partir d'une figure de diffraction détectée desdits atomes ou molécules neutres diffusés vers l'avant par ladite surface (3) à caractériser.

**18.** Procédé selon la revendication 17, mis en oeuvre lors de la fabrication d'un cristal par épitaxie par jets moléculaires, comportant également :

- une étape d'observation d'un comportement oscillatoire dans le temps de ladite figure de diffraction ; et
- une étape d'extraction d'une information relative à la croissance par épitaxie de couches atomiques successives formant ledit cristal à partir de ladite observation d'un comportement oscillatoire dans le temps de ladite figure de diffraction.

**Patentansprüche**

**1.** Vorrichtung zur Oberflächencharakterisierung, Folgendes beinhaltend:

- Mittel (1) zur Erzeugung eines Strahls (2) von neutralen Atomen oder Molekülen, angeordnet, um den Strahl (2) auf eine zu charakterisierende Oberfläche (3) zu richten; und
- positionsempfindliche Detektionsmittel (4) zur Detektion der Atome oder Moleküle des Strahls (2), welche von der zu charakterisierenden Oberfläche (3) nach vorn verstreut werden;

**dadurch gekennzeichnet, dass**

- die Mittel (1) zur Erzeugung eines Strahls (2) von neutralen Atomen oder Molekülen geeignet sind, um einen Strahl (2) zu erzeugen, der eine Energie zwischen 50 eV und 5 keV und eine Divergenz von nicht über 0,05° besitzt; und
- dass die Mittel (1) zur Erzeugung eines Strahls von neutralen Atomen oder Molekülen geeignet sind, um den Strahl (2) auf die zu charakterisierende Oberfläche (3) mit einem Einfallwinkel von nicht über 10° in Bezug auf die Ebene der Oberfläche (3) zu richten;

in der Weise, dass ein Diffraktionsbild der von der zu charakterisierenden Oberfläche (3) nach vorn verstreuten neutralen Atome oder Moleküle durch die (4) positionsempfindlichen Detektionsmittel detektierbar sind.

2. Vorrichtung nach Anspruch 1, bei welcher die Mittel (1) zur Erzeugung eines Strahls von neutralen Atomen oder Molekülen geeignet sind, um einen Strahl (2) zu erzeugen, der eine Energie zwischen 100 eV und 2 keV und vorzugsweise zwischen 100 eV et 1 keV besitzt.

3. Vorrichtung nach einem der vorhergehenden Ansprüche, bei welcher die Mittel (1) zur Erzeugung eines Strahls von neutralen Atomen oder Molekülen geeignet sind, um einen Strahl (2) zu erzeugen, der eine Energiestreuung von nicht über 5 % besitzt.

4. Vorrichtung nach einem der vorhergehenden Ansprüche, bei welcher der Einfallwinkel ($\theta_{inc}$) und die Energie des Strahls (2) von Atomen oder Molekülen so gewählt sind, dass die mit der Bewegung in eine rechtwinklig zur Oberfläche (3) gelegene Richtung verbundene Energie kleiner als oder gleich 1 eV ist.

5. Vorrichtung nach einem der vorhergehenden Ansprüche, bei welcher die Mittel (1) zur Erzeugung eines Strahls von neutralen Atomen oder Molekülen geeignet sind, um einen Strahl (2) zu erzeugen, der aus Partikeln besteht, deren Atommasse zwischen 1 und 20 au beträgt.

6. Vorrichtung nach einem der vorhergehenden Ansprüche, bei welcher die Mittel (1) zur Erzeugung eines Strahls von neutralen Atomen oder Molekülen Folgendes beinhalten:

   - ein Mittel (11) zur Erzeugung eines Strahls (2') von atomaren oder molekularen Ionen;
   - ein Mittel (14) zur Neutralisierung des Strahls von atomaren oder molekularen Ionen; und
   - ein Mittel (15) zur Kollimation des Strahls (2) von neutralen Atomen oder Molekülen, welches durch Neutralisierung des Strahls (2') von atomaren oder molekularen Ionen erzielt wurde.

7. Vorrichtung nach Anspruch 6, bei welcher die Mittel (1) zur Erzeugung eines Strahls von neutralen Atomen oder Molekülen ebenfalls ein Mittel (12) zur Massenfilterung der atomaren oder molekularen Ionen beinhalten.

8. Vorrichtung nach Anspruch 6 oder 7, bei welcher die Mittel (1) zur Erzeugung eines Strahls von neutralen Atomen oder Molekülen ein Mittel (13) zum Zerhacken zum Erzeugen eines gepulsten Strahls (2) beinhalten.

9. Vorrichtung nach Anspruch 8, bei welchem die positionsempfindlichen Detektionsmittel (4) ebenfalls eine Zeitempfindlichkeit mit einer Auflösung von nicht über 50 ns besitzen, und vorzugsweise von nicht über 10 ns, um eine Ermittlung des Energieverlustes der neutralen Atome oder Moleküle des Strahls (2) infolge der Verstreuung durch die Oberfläche (3) durch Messung der Flugzeit ermöglichen.

10. Vorrichtung nach einem der vorhergehenden Ansprüche, ebenfalls beinhaltend ein sekundäres Detektionsmittel (1600) von neutralen oder ionisierten Atomen oder Molekülen, wobei das sekundäre Detektionsmittel (1600) eine Zeitauflösung von nicht über 1 μs besitzt, vorzugsweise von nicht über 100 ns, und noch vorzugsweise von nicht über 10 ns, und welches in der Weise angeordnet ist, dass es neutrale oder ionisierte Atome oder Moleküle detektiert, welche die zu charakterisierende Oberfläche (3) entlang einer Flugbahn verlassen, welche mit der Oberfläche (3) einen Winkel bildet, welcher größer ist als der Spiegelreflexionswinkel des Strahls (2) von neutralen Atomen oder Molekülen.

11. Maschine (1000) zur Molekularstrahlepitaxie, umfassend eine Vorrichtung zur Charakterisierung von Oberflächen nach einem der vorhergehenden Ansprüche, angeordnet zur Charakterisierung der Oberfläche (3) eines wachsenden Kristalls.

12. Verfahren zur Charakterisierung von Oberflächen, folgende Schritte umfassend:

   - Richten eines Strahls (2) von neutralen Atomen oder Molekülen auf die zu charakterisierende Oberfläche (3); und
   - positionsempfindliches Detektieren der neutralen Atome oder Moleküle des Strahls (2), welche von der zu charakterisierenden Oberfläche (3) nach vorn verstreut werden;

   **dadurch gekennzeichnet, dass**

   - der Strahl (2) von neutralen Atomen oder Molekülen eine Energie zwischen 50 eV und 5 keV und eine Divergenz von nicht über 0,05° besitzt; und
   - dass der Einfallwinkel ($\theta_{inc}$) des Strahls (2) auf der zu charakterisierenden Oberfläche (3) 10° in Bezug auf die Ebene der Oberfläche nicht überschreitet,

   in der Weise, dass mindestens ein Teil der nach vorn verstreuten neutralen Atome oder Moleküle von der zu charakterisierenden Oberfläche (3) diffraktiert wird.

13. Verfahren zur Charakterisierung von Oberflächen nach Anspruch 12, bei welchem der Strahl (2) von neutralen Atomen oder Molekülen eine Energie zwischen 100 eV und 2keV besitzt, und vorzugsweise zwischen 100 eV und 1 keV.

14. Verfahren zur Charakterisierung von Oberflächen nach einem der Ansprüche 12 oder 13, bei welchem der Strahl (2) von neutralen Atomen oder Molekülen eine Energiestreuung von nicht über 5 % besitzt.

15. Verfahren zur Charakterisierung von Oberflächen nach einem der Ansprüche 12 bis 14, bei welchem der Einfallwinkel ($\theta_{inc}$) und die Energie des Strahls (2) von Atomen oder Molekülen so gewählt sind, dass die mit der Bewegung in eine rechtwinklig zur Oberfläche (3) gelegene Richtung verbundene Energie kleiner als oder gleich 1 eV ist.

16. Verfahren zur Charakterisierung von Oberflächen nach einem der Ansprüche 12 bis 15, bei welchem der Strahl (2) aus Partikeln besteht, deren Atommasse zwischen 1 und 20 au beträgt.

17. Verfahren nach einem der Ansprüche 12 bis 16, ebenfalls umfassend einen Schritt der Ermittlung von mindestens einem kristallografischen Paramter der zu charakterisierenden Oberfläche (3) anhand eines detektierten Diffraktionsbildes der von der zu charakterisierenden Oberfläche nach vorn verstreuten neutralen Atome oder Moleküle.

18. Verfahren nach Anspruch 17, umgesetzt bei der Herstellung eines Kristalls durch Molekularstrahlepitaxie, ebenfalls folgende Schritte beinhaltend:

- einen Schritt der Beobachtung des Oszillationsverhaltens des Diffraktionsbildes im Zeitverlauf; und
- einen Schritt der Extraktion einer Information zum Wachstum durch Epitaxie von aufeinanderfolgenden atomaren Schichten, welche das Kristall bilden, anhand der Beobachtung eines Oszillationsverhaltens des Diffraktionsbildes im Zeitverlauf.

**Claims**

1. A device for characterising surfaces, comprising:

- means (1) for generating a beam (2) of neutral atoms or molecules, arranged to direct said beam (2) towards a surface (3) to be characterised; and
- means (4) of detection that are sensitive to position for detecting the neutral atoms or molecules of said beam (2) that have been diffused forwards by said surface (3) to be characterised;

**characterised in that**

- said means (1) for generating a beam (2) of neutral atoms or molecules are adapted to produce a beam (2) having energy between 50 eV and 5 keV and a divergence no greater than 0.05°; and
- said means (1) for generating a beam of neutral atoms or molecules are adapted to direct said beam (2) towards said surface (3) to be characterised with an angle of incidence no greater than 10° relative to the plane of said surface (3);

in such a manner that a diffraction pattern of said neutral atoms or molecules diffused forwards by said surface (3) to be characterised is detectable by said position-sensitive detection means (4).

2. The device according to Claim 1, wherein said means (1) for generating a beam of neutral atoms or molecules are adapted to produce a beam (2) having energy of between 100 eV and 2 keV, and preferably between 100 eV and 1 keV.

3. The device according to any of the preceding claims, wherein said means (1) for generating a beam of neutral atoms or molecules are adapted to produce a beam (2) having energy dispersion no greater than 5%.

4. The device according to any of the preceding claims, wherein the angle of incidence ($\theta inc$) and the energy of said beam (2) of atoms or molecules are selected in such a manner that the energy associated with movement in a direction perpendicular to the surface (3) is less than or equal to 1 eV.

5. The device according to any of the preceding claims, wherein said means (1) for generating a beam of neutral atoms or molecules are adapted to generate a beam (2) consisting of particles having an atomic mass of between 1 and 20 au.

6. The device according to any of the preceding claims, wherein said means (1) for generating a beam of neutral atoms or molecules comprise:

- a means (11) for generating a beam (2') of atomic or molecular ions;
- a means (14) for neutralising said beam of atomic or molecular ions; and
- a means (15) for collimating the beam (2) of neutral atoms or molecules obtained by neutralising said beam (2') of atomic or molecular ions.

7. The device according to Claim 6, wherein said means (1) for generating a beam of neutral atoms or molecules also comprise a means (12) for filtering said atomic or molecular ions by mass.

8. The device according to Claim 6 or 7, wherein said means (1) for generating a beam of neutral atoms or molecules comprise a chopping means (13) for generating a pulsed beam (2).

9. The device according to Claim 8, wherein said position-sensitive detection means (4) also exhibit time sensitivity, with a resolution no greater than 50 ns, and preferably no greater than 10 ns, so as to allow determination of the energy loss of the neutral atoms or molecules of said beam (2) as a result of diffusion by said surface (3) by measuring the flight time.

10. The device according to any of the preceding claims, also comprising a secondary means of detecting (1600) neutral or ionised atoms or molecules, said secondary detection means (1600) having time resolution no greater than 1 $\mu$s, preferably no greater than 100 ns, and even more preferably no greater than 10 ns, and being arranged in such a manner as to detect neutral or ionised atoms or molecules that leave the surface (3) to be characterised on a trajectory that forms with said surface (3) an angle greater than the specular reflection angle of said beam (2) of neutral atoms or molecules.

11. A machine (1000) for molecular jet epitaxy, comprising a device for surface characterisation according to any of the preceding claims, arranged to characterise the surface (3) of a crystal that is growing.

12. A method for characterising surfaces comprising the steps of:

    - directing a beam (2) of neutral atoms or molecules onto the surface (3) to be characterised; and
    - detecting in a position-sensitive manner the neutral atoms or molecules of said beam (2) that have been diffused forwards by said surface (3) to be characterised;

    **characterised in that**

    - said beam (2) of neutral atoms or molecules has energy of between 50 eV and 5 keV and a divergence no greater than 0.05°; and
    - **in that** the angle of incidence ($\theta$inc) of said beam (2) on said surface (3) to be characterised is no greater than 10° relative to the plane of said surface;

    in such a manner that at least some of said forwardly-diffused neutral atoms or molecules are diffracted by said surface (3) to be characterised.

13. The method for characterising surfaces according to Claim 12, wherein said beam (2) of neutral atoms or molecules has energy of between 100 eV and 2 keV, and preferably between 100 eV and 1 keV.

14. A method for characterising surfaces according to either of Claims 12 or 13, wherein said beam (2) of neutral atoms or molecules has energy dispersion no greater than 5%.

15. The method for characterising surfaces according to any of Claims 12 to 14, wherein the angle of incidence ($\theta$inc) and the energy of said beam (2) of atoms or molecules are selected in such a manner that the energy associated with movement in a direction perpendicular to the surface (3) is less than or equal to 1 eV.

16. The method for characterising surfaces according to any of Claims 12 to 15, wherein said beam (2) consists of particles having an atomic mass between 1 and 20 au.

17. The method according to any of Claims 12 to 16, also comprising a step for determining at least one crystallographic parameter of said surface (3) to be characterised from a detected diffraction pattern of said neutral atoms or molecules diffused forwards by said surface (3) to be characterised.

18. The method according to Claim 17, implemented during fabrication of a crystal by molecular beam epitaxy, also comprising:

    - a step of observing oscillatory behaviour over time of said diffraction pattern; and
    - a step of extracting information relating to the epitaxial growth of successive atomic layers forming said crystal on the basis of said observation of oscillatory behaviour over time of said diffraction pattern.

$\vartheta_{inc}$

$\vartheta_{ref} = \vartheta_{inc}$

a

2-i

2-1

2-0

$\phi$

FIG.1A

3

2

1

4

a

2-1

2-0

2-i

$\phi$

a sin$\phi$

3

FIG.1B

EP 2 044 423 B1

D-1   D0   D1

CD

S   FIG.2

$H^0 - NaCl(001)$
$E_0 = 500\,eV - \theta_{in} = 1,4°$

y03_a_18

Intensité

Temps de vol (canaux)

FIG.5

FIG.3A

FIG.3B

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1401007 A

**Littérature non-brevet citée dans la description**

- **A. SCHÜLLER et al.** Dynamic dependence of interaction potentials for keV atoms at metal surfaces. *Phys. Rev. A,* 2004, vol. 69, 050901
- **D. P. WOODRUFF ; T. A. DELCHAR.** Modern techniques of surface science. Cambridge University Press, 1986
- **R. I. MASEL et al.** Quantum scattering from a sinusoidal hard wall: atomic diffraction from solid surfaces. *Phys. Rev. B,* 1975, vol. 12, 5545
- **W. HAYAMI et al.** Structural analysis of the HfB2(0001) surface by impact-collision ion scattering spectroscopy. *Surface Science,* 1998, vol. 415, 433-437
- **M. SHI et al.** Time-of-flight scattering and recoiling spectrometry. III. The structure of hydrogen on the W(211) surface. *Phys. Rev. B,* 1989, vol. 40, 10163
- **Y. WANG et al.** Structure of the Si{100} surface in the clean (2x1), (2x1)-H monohydride, (1x1)-H dihydride, and c(4x4)-H phases. *Phys. Rev. B,* 1993, vol. 48, 1678